# EUROPÄISCHE PATENTSCHRIFT

(11) **EP 2 918 857 B1**
(45) Veröffentlichungstag und Bekanntmachung des Hinweises auf die Patenterteilung: **16.10.2019**
(21) Anmeldenummer: 14193814.2
(22) Anmeldetag: 19.11.2014
(51) Int. Cl.: F16C 7/00, F16C 3/02

(54) **Stange für Verbindungsstützen**
Rod with connection points
Barre dotée de supports de liaison

(30) Priorität: 14.12.2013 DE 102013021167
(43) Veröffentlichungstag der Anmeldung: 16.09.2015
(73) Patentinhaber: Mac Panther GmbH, 28199 Bremen (DE)
(72) Erfinder: Kleine, Michael, 28832 Achim (DE); Kleine, Werner, 28832 Achim (DE); Sandikci, Dursun-Ali, 28307 Bremen (DE)
(74) Vertreter: Eisenführ Speiser

(56) Entgegenhaltungen:
- EP-A1- 2 181 783
- DE-A1-102010 041 791
- DE-T2- 69 700 495
- US-A- 4 523 872

## Beschreibung

Die Erfindung betrifft eine Stange für Verbindungstützen, insbesondere zum Aufnehmen von axialen Zug- und Druckkräften und von Drehmomenten, gebildet von einem Drahtabschnitt aus Metall mit einer im Wesentlichen prismatischen, vorzugsweise zylinderförmigen Umfangsoberfläche und an beiden Stangenendbereichen angeformten Profilierungen geeignet für die Befestigung von Koppelteilen aus Kunststoff oder Leichtmetall vorzugsweise durch Umspritzen. Die Erfindung betrifft weiterhin eine Verbindungsstütze, insbesondere zum Aufnehmen von axialen Zug- und Druckkräften und von Drehmomenten, gebildet von der vorstehend beschriebenen Stange mit an beiden Stangenenden vorzugsweise durch Umspritzen befestigten Koppelteilen aus Kunststoff oder Leichtmetall und wobei jedes Koppelteil über eine Länge, die mindestens dem zweifachen Durchmesser der Stange im mittleren Stangenbereiches entspricht, mit der Stange verbunden ist. Die Erfindung betrifft ferner ein Verfahren zur Herstellung einer Stange für Verbindungsstützen, insbesondere zum Aufnehmen von axialen Zug- und Druckkräften und von Drehmomenten.

Vorrichtungen der eingangs beschriebenen Art sind beispielsweise aus der EP 2 181 783 B1, der DE 10 2010 041 791 A1, der DE 697 00 495 T2 oder der US 4 523 872 A1 bekannt.

Die EP 2 181 783 B1 zeigt den gattungsgemäßen Teil des Anspruchs 1. Sie werden unter dem Begriff Pendelstützen oder, weil aus mehreren Materialien bestehend, unter der Bezeichnung Hybrid-Pendelstützen für Autofahrgestelle eingesetzt. Hierbei müssen die Pendelstützen vorwiegend Zug- und Druckbelastungen aushalten und dieses auch bei Temperaturen von bis zu 80°C, wodurch gerade die Verbindung mit Koppelstücken aus thermoplastischen Kunststoff überlastet werden kann.

Die Forderung nach Gewichtsreduzierung im Autobau führt zu Pendelstützen, deren Stangendurchmesser möglichst klein sein soll, was durch die Verwendung z.B. hochfester Stahlsorten oder von gehärteten Stahlstangen prinzipiell möglich ist. Damit verbunden ist allerdings auch ein kleinerer Durchmesser der Stangenendbereiche bei den bekannten Stangen für Pendelstützen, was bei gleichhohen Belastungen zu einem Versagen der Verbindungsstelle insbesondere bei höheren Temperaturen führt, indem das Koppelstück von der Stange abgezogen wird, da das Lagesicherungsvolumen der Profilierungen - das ist das Volumen des Koppelstückmaterials, welches einer Lageänderung zwischen Stange und Koppelstück entgegenwirkt - für die Belastungen zu klein geworden ist.

Aufgabe der vorliegenden Erfindung ist es daher, eine Stange und eine Verbindungsstütze der eingangs genannten Art zu verbessern. Aufgabe der Erfindung ist es auch die Fertigung einer Stange wirtschaftlicher zu gestalten.

Diese Aufgabe wird durch die Gegenstände der unabhängigen Ansprüche gelöst. Bevorzugte Ausführungsformen der Erfindung sind in den Unteransprüchen angegeben.

Ausführungsformen der Erfindung zeichnen sich unter anderem dadurch aus, dass eine um die Profilierungen des Stangenendbereiches gelegte Hüllkurve einen Durchmesser aufweist, der um mindestens 6% größer ist als der Durchmesser einer um den prismatischen mittleren Stangenbereich gelegten Hüllkurve; und die Profilierungen zumindest in Teilbereichen eine Profiltiefe von mindestens 0,5mm, vorzugsweise von annähernd 1mm aufweisen. Der größere Durchmesser der Profilierungen gegenüber dem Durchmesser des mittleren Stangenbereiches erlaubt eine große Profiltiefe, ohne dass der verbleibende Restquerschnitt des Stangenendbereiches gefährlich geschwächt wird. Dadurch dass die Koppelteile eine Verbindungslänge aufweisen die länger ist als die Länge der Profilierungen, ergibt sich weiterhin der Vorteil, dass durch den größeren Durchmesser der Profilierungen gegenüber dem Durchmesser des mittleren Stangenbereiches der über die Profilierungen reichende und dem mittleren Stangenabschnitt zugewandte Bereich der Koppelteile einen Hinterschnitt bildet, und dieses Hinterschnittvolumen den axial wirkenden Zugkräften zusätzlich Widerstand entgegensetzt. Damit ist die erfindungsgemäß ausgebildete Stange gegenüber einer Stange mit identischen Profilierungen jedoch im mittleren Stangenbereich gleichem Durchmesser wie der Hüllkreisdurchmesser der Profilierungen für Zugbelastungen sogar besser geeignet als diese dickere und schwerere Stange. Dies ist deswegen wichtig, da Hybrid-Pendelstützen für Autofahrgestelle insbesondere durch Zugbelastungen und weniger durch Torsionsbelastungen beansprucht werden.

Die Erfindung zeichnet sich dadurch aus, dass der zwischen dem Hüllkurvendurchmesser der Profilierungen und den Profilierungen liegende und als Profilvolumen bezeichnete Zwischenbereich je Stangenende ein Volumen von mindestens 250mm³ und vorzugsweise über 350 mm³ aufweist. Dies beruht auf der Erkenntnis, dass die Größe des Profilvolumens speziell in Verbindung mit thermoplastischen Koppelteilen entscheidend für die Belastbarkeit der Verbindung Stange-Koppelteil ist.

Bei einer bevorzugten Ausführungsform der Erfindung weist die um die Profilierungen des Stangenendbereiches gelegte Hüllkurve einen Durchmesser auf, der um maximal 20% größer ist als der Durchmesser einer um den prismatischen mittleren Stangenbereich gelegten Hüllkurve und die Profiltiefe der Profilierungen beträgt maximal 2mm.

Bei der Erfindung sind die Profilierungen je Stangenendbereich als mindestens eine spindelförmig um die Stange verlaufende Spindelrille ausgebildet und diese Rille verläuft an beiden Stangenendbereichen in gleichem Schrägungssinn. Unter Zugbelastung versucht die Stange sich gegenüber dem Koppelteil aus der Profilierung herauszudrehen. Da aber die beiden Koppelteile aufgrund des gleichen Schrägungssinns der Spindelrillen der Stange bei Zugbelastung jeweils einen entgegengesetzten Drehimpuls mitteilen, heben sich diese Drehimpulse auf und die Verbindung zwischen Stange und den Koppelteilen kann nicht durch Herausdrehen der Stange aufgelöst werden.

Bei einer bevorzugten Ausführungsform dieser Erfindung ist die Nutbreite der Spindelrille gegenüber der Stegbreite um mindestens 30 %, bevorzugt um etwa 100 % größer. Dieses berücksichtigt die Erkenntnis, dass die größere Festigkeit des Stangenmaterials gegenüber dem Koppelmaterial durch das Verhältnis der Stegbreite zur Nutbreite des Stangenprofils genutzt werden kann um eine möglichst starke Verbindung zwischen Stange und Koppelteil zu erzielen.

Bei einer bevorzugten Ausführungsform dieser Erfindung verlaufen die Spindelrillen zweigängig bis siebengängig und der Schrägungswinkel α ist an beiden Stangenenden gleich. Durch den gleichen Schrägungswinkel heben sich die auf die Stange wirkenden Drehimpulse vollständig auf. Hierbei werden bei kleineren Stangendurchmessern etwa im Bereich von 7mm die zweigängige und bei größeren Stangendurchmessern etwa im Bereich von 20 mm die siebengängige Variante bevorzugt eingesetzt. Dadurch ergibt sich je Spindelrille ein ausreichend großes Profilvolumen was auch ihre Fertigung erleichtert.

Bei einer besonders bevorzugten Ausführungsform der Erfindung verlaufen die Spindelrillen dreigängig und unter einem Schrägungswinkel von 50° bis 75°. Durch den Schrägungswinkel kann die Belastbarkeit der Verbindung Stange/Koppelteil hinsichtlich Axial- und Drehmomentbelastung optimiert werden. Ein größerer Schrägungswinkel erlaubt so größere Zug- oder Druckbelastungen welche auf die Verbindungsstelle einwirken können. Ein kleinerer Schrägungswinkel erlaubt entsprechend größere Drehmomentbelastungen.

Bei einer weiteren bevorzugten Ausführungsform dieser Erfindung laufen die Profilierungen in die Stangenendfläche aus. Dies ergibt auch die Möglichkeit Koppelteile durch Aufschrauben mit der Stange zu verbinden, was Produktion und Montage vereinfachen kann.

Bei einer bevorzugten Ausführungsform der Erfindung weisen die Profilierungen einen Profilabstand von der Stangenendfläche auf und dieser Abstand ist vorzugsweise kleiner als der Durchmesser des mittleren Stangenbereiches. Da der Rillengrunddurchmesser kleiner als der Stangendurchmesser ist, wird somit das Trennen von Koppelteil und Stange durch Zugkräfte weiter erschwert.

Bei einer bevorzugten Ausführungsform der Erfindung ist je Stangenendbereich zusätzlich mindestens eine Querrille lateral zur Längsachse der Stange neben den Spindelrillen, vorzugsweise zwischen Stangenendfläche und Spindelrillen, angeordnet. Hierdurch kann bei gegebenem Spindelprofil und Spindelschrägungswinkel die axiale Belastbarkeit erhöht werden.

Ausführungsformen der erfindungsgemäßen Verbindungsstütze bestehend aus einer erfindungsgemäßen Stange und an beiden Stangenenden vorzugsweise durch Umspritzen befestigten Koppelteilen aus Kunststoff oder Leichtmetall wobei jedes Koppelteil über eine Verbindungslänge, die mindestens dem zweifachen Durchmesser der Stange im mittleren Stangenbereiches entspricht, mit der Stange verbunden ist, zeichnen sich dadurch aus, dass jedes Koppelstück ein den axialen Zugkräften entgegenwirkendes und durch die Profilierungen des Stangenendbereiches definiertes in die Profilierungen hineinragendes Abzugsvolumen von mindestens 250 mm³ aufweist. Dieses Abzugsvolumen ist der Anteil des Profilvolumens welcher der Zugbelastung entgegenwirkt. Es hat sich gezeigt, dass diese 250 mm³ notwendig sind um Hybridpendelstützen mit ausreichender Axialbelastbarkeit für Autofahrwerke zu erstellen.

Bei einer bevorzugten Ausführungsform der erfindungsgemäßen Verbindungsstütze weist jedes Koppelteil ein den Drehmomenten entgegenwirkendes und durch die Profilierungen des Stangenendbereiches definiertes in die Profilierungen hineinragendes Abdrehvolumen von mindestens 250mm³ auf. Dieses Abdrehvolumen ist der Anteil des Profilvolumens welcher einer Drehmomentbelastung entgegenwirkt. Es hat sich gezeigt, dass diese 250 mm³ notwendig sind um Hybridpendelstützen mit ausreichender Drehmomentbelastbarkeit für Autofahrwerke zu erstellen.

Bei einer besonders bevorzugten Ausführungsform der erfindungsgemäßen Verbindungsstütze weist jedes Koppelteil ein durch die Profilierungen des Stangenendbereiches definiertes Lagesicherungsvolumen auf, welches größer als 350 mm³ ist. Dieses Lagesicherungsvolumen besteht zum einen aus dem Profilvolumen und zum anderen aus dem Hinterschnittvolumen.

Ein Verfahren zur Herstellung einer Stange für Verbindungsstützen bestehend aus einem Drahtabschnitt aus Metall mit einer im Wesentlichen prismatischen, vorzugsweise zylinderförmigen Umfangsoberfläche und an den Stangenendbereichen ausgebildeten Profilierungen deren Hüllkurve einen Durchmesser aufweist, der um mindestens 6% größer ist als der Durchmesser einer um den mittleren Stangenbereich gelegten Hüllkurve und die Profilierungen zumindest in Teilbereichen eine Profiltiefe von mindestens 0,5mm, vorzugsweise von annähernd 1mm aufweisen, zeichnet sich dadurch aus, dass die Profilierungen durch Rollwalzen erzeugt werden. Durch das Rollwalzen wird in überraschend einfacher Weise sowohl das gewünschte Profil vollständig erzeugt und gleichzeitig wird der kleinere Ausgangsdurchmesser des Drahtes an den Stangenenden vergrößert.

Im Folgenden werden nun anhand der Zeichnungen bevorzugte Ausführungsformen der Erfindung beschrieben. Dabei werden gleiche, ähnliche oder funktionsgleiche Teile mit den gleichen Bezugszeichen bezeichnet. Die Zeichnung zeigt:
- Figur 1: eine Seitenansicht einer Stange für Verbindungsstützen, die nicht unter den Schutzbereich der Ansprüche fällt;
- Figur 2: eine vergrößerte Teilansicht der Figur 1;
- Figur 3: einen Querschnitt durch die Stange der Figur 1 entlang der Linie B-B der Figur 2;
- Figur 4: eine Seitenansicht einer Stange für Verbindungstützen, die nicht unter den Schutzanspruch der Ansprüche fällt;
- Figur 5: eine Seitenansicht einer ersten Ausführungsform einer erfindungsgemäßen Stange für Verbindungstützen;
- Figur 6: eine vergrößerte Teilansicht der Figur 5;
- Figur 7: eine vergrößerte Teilansicht einer zweiten Ausführungsform einer erfindungsgemäßen Stange für Verbindungstützen;
- Figur 8: eine schematische Seitenansicht einer Verbindungstütze, die nicht unter den Schutzanspruch der Ansprüche fällt.

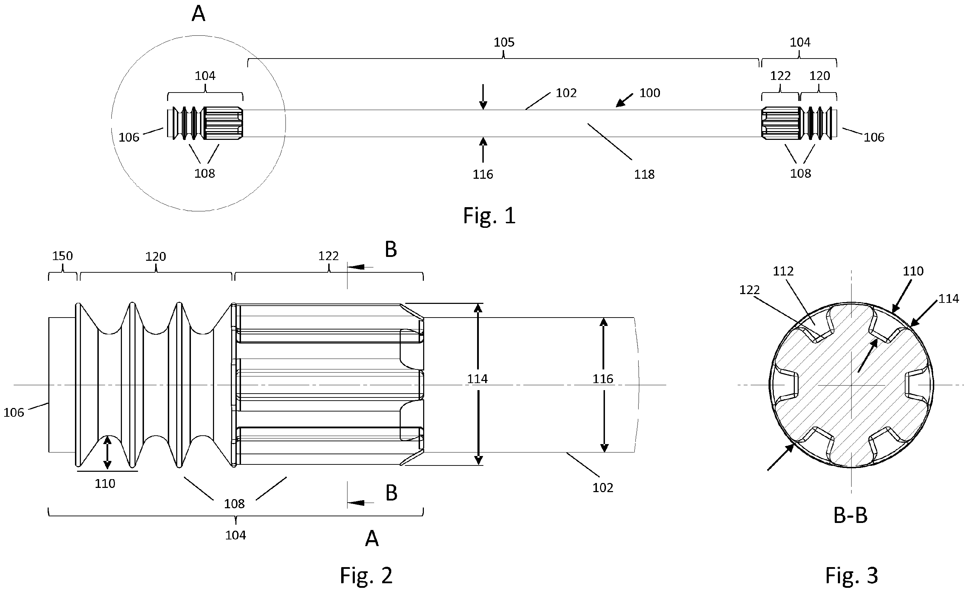

Figur 1 zeigt eine Seitenansicht einer nicht erfindungsgemäßen Stange 100 für Verbindungstützen mit einer zylinderförmigen Umfangsoberfläche 102. Die Stange 100 weist zwei Stangenendbereiche 104 mit Stangenendflächen 106 sowie dem mittleren Stangenbereich 105 mit einem Hüllkurvendurchmesser 116 auf. An den Stangenendbereichen 104 sind die Profilierungen 108 angebracht, die aus mehreren Querrillen 120 lateral zur Längsachse 118 der Stange 100 und mehreren Längsrillen 122 parallel zur Längsachse 118 bestehen. Die Querrillen 120 sind in besonderem Maß geeignet um Zugkräfte parallel zur Längsachse 118 zu übertragen. Die Längsrillen 122 sind für die Übertragung von Drehmomenten ausgelegt.

Figur 2 zeigt als vergrößerte Teilansicht der Figur 1 im Wesentlichen den linken Stangenendbereich 104. Die Querrillen 120 weisen von der Stangenendfläche 106 den Profilabstand 150 auf. Der Durchmesser 114 der Hüllkurve um die Profilierungen 108 ist deutlich größer als der Hüllkurvendurchmesser 116 des mittleren Stangenbereiches 105, in dieser Ausführungsform etwa um 18 %. Die Profiltiefe 110 kann für die einzelnen Profilbereiche 108 unterschiedlich groß sein, jedoch muss zumindest in Teilbereichen der Profilierungen 108 die Profiltiefe 110 mehr als 0,5mm betragen.

Figur 3 zeigt einen vergrößerten Querschnitt durch die Stange 100 der Figur 1 entlang der Linie B-B der Figur 2. Die sechs Längsrillen 122 weisen eine Profiltiefe 110 von mehr als 0,5 mm auf. Das Profilvolumen 112 wird im Querschnitt von dem Hüllkurvendurchmesser 114 der Profilierungen einerseits und den Profilierungen 122 und 120 andererseits begrenzt und erstreckt sich in der Länge über die Längsausdehnung der Querrillen 120 und der Längsrillen 122. Das Profilvolumen 112 ist ein Maßstab für die Belastbarkeit der Verbindung Stange/Koppelteil und sollte mindestens 250 mm³ betragen.

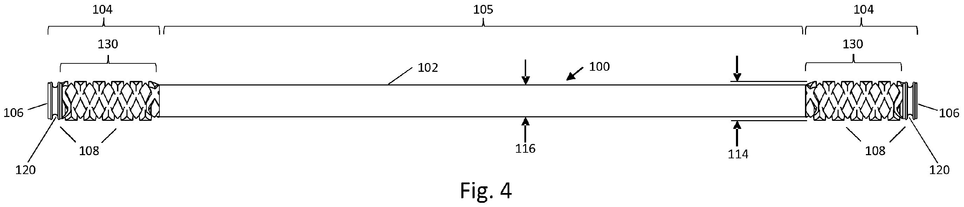

Figur 4 zeigt eine Seitenansicht einer Stange 100 für Verbindungstützen. Diese unterscheidet sich von der Stange der Figur 1 dadurch, dass die Profilierungen 108 aus einer Querrille 120 und Kreuzrillen 130 gebildet sind. Die Kreuzrillen 130 sind geeignet sowohl Axialkräfte als auch Drehmomente übertragen zu können. Die eine Querrille 120 bildet eine Schulter gegen die Kreuzrillen 130 wodurch die axiale Belastbarkeit zusätzlich verstärkt wird.

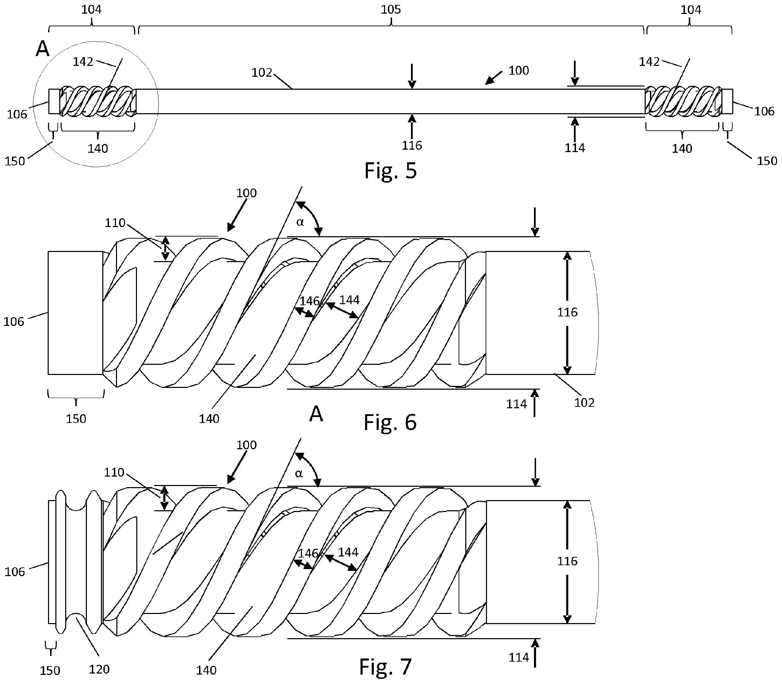

Figur 5 zeigt eine Seitenansicht einer ersten Ausführungsform einer erfindungsgemäßen Stange 100 für Verbindungstützen. Diese unterscheidet sich von der Stange der Figur 1 dadurch, dass die Profilierungen 108 mit einem Profilabstand 150 von der Stangenendfläche 106, aus mehreren Spindelrillen 140 gebildet sind und diese an beiden Stangenendbereichen 104 unter gleichem Schrägungssinn 142 verlaufen. Eine einfache Überlegung zeigt den überraschenden Vorteil dieser Konzeption: Wäre z.B. der rechte Stangenendbereich als Gleitlager oder als Kugellager ausgebildet mit einem Sicherungsring zum Übertragen von Zugkräften, so würde der linke Stangenendbereich 104 unter Zugbelastung die Tendenz haben sich aus dem Koppelteil 210 herauszuschrauben. Die verblüffend einfache Lösung mit den Spindelrillen 140 macht also nur dadurch Sinn, wenn an beiden Enden 104 der Stange 100 diese Spindelrillen 140 angebracht sind, da nur dann unter Zugbelastung der auf beide Enden 104 wirkende Drehimpuls aufgehoben wird.

Figur 6 zeigt als vergrößerte Teilansicht der Figur 5 im Wesentlichen den linken Stangenendbereich 104. Die Spindelrillen 140 mit dem Schrägungssinn 142 weisen an beiden Stangenendbereichen 104 den gleichen Schrägungswinkel α auf. Die Spindelrillen 140 haben eine Nutbreite 144 und eine Stegbreite 146, wobei die Nutbreite 144 in der gezeichneten Ausführung gut 100 % breiter als die Stegbreite 146 ist. Die Profiltiefe 110 ist über die Länge der Profilierung konstant. Der Profilabstand 150 mit dem Durchmesser 116 wirkt zur Seite der Spindelrillen 140 als begrenzende Schulterkante welche einem axialen Herausdrehen der Koppelteile zusätzlichen Widerstand bietet.

Figur 7 zeigt die vergrößerte Teilansicht einer zweiten Ausführungsform einer erfindungsgemäßen Stange 100 für Verbindungstützen. Gegenüber der Ausführung in Figur 6 ist hier im Profilabstand 150 eine Querrille 120 direkt angrenzend an die Spindelrillen 120 angebracht. Die Querrille 120 hat Rillenschultern, die im Durchmesser größer als der Stangendurchmesser 116 sind. Dadurch ergibt sich eine zusätzlich verbesserte Absicherung gegen ein Herausdrehen oder Abziehen des Koppelteils 210 unter Zugbelastung.

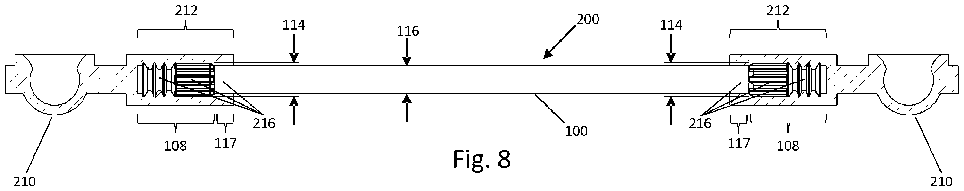

Figur 8 zeigt eine schematische Seitenansicht einer Verbindungstütze 200. Die Stange 100 weist an beiden Enden Profilierungen 108 auf. Die Koppelteile 210 aus Kunststoff oder Leichtmetall bestehend sind über die Verbindungslänge 212 mit der Stange 100 verbunden und durch die Profilierungen 108 auf der Stange 100 gesichert. Die Verbindungslänge 212 ergibt sich aus der axialen Erstreckung der Profilierungen 108 und der axialen Erstreckung des rohrförmigen Hinterschnittvolumens 117 bis zum inneren Ende des Koppelteils 210. Das Lagesicherungsvolumen 216, welches insbesondere bei Zugbelastungen ein Maß für die Belastbarkeit der Verbindung Stange/Koppelteil ist, ergibt sich aus dem Profilvolumen 112 der Profilierungen 108 und dem Hinterschnittvolumen 117. Je größer die Differenz der Durchmesser 114 und 116 ist, desto größer ist auch das Lagesicherungsvolumen 216.

### Bezugszeichen

- 100: Stange für Verbindungsstütze
- 102: Umfangsoberfläche
- 104: Stangenendbereich
- 105: mittlerer Stangenbereich
- 106: Stangenendfläche
- 108: Profilierungen
- 110: Profiltiefe
- 112: Profilvolumen
- 114: Durchmesser der Hüllkurve um Profilierungen des Stangenendbereiches
- 116: Durchmesser der Hüllkurve um prismatischen mittleren Stangenbereich
- 117: Hinterschnittvolumen
- 118: Längsachse
- 120: Querrille
- 122: Längsrille
- 130: Kreuzrillen
- 140: Spindelrille
- 142: Schrägungssinn
- α: Schrägungswinkel
- 144: Nutbreite
- 146: Stegbreite
- 150: Profilabstand
- 200: Verbindungsstütze
- 210: Koppelteil
- 212: Verbindungslänge
- 216: Lagesicherungsvolumen

## Patentansprüche

1. Stange (100) für Verbindungsstützen, insbesondere zum Aufnehmen von axialen Zug- und Druckkräften und von Drehmomenten, mit:
- einem Drahtabschnitt aus Metall mit einer im Wesentlichen prismatischen, vorzugsweise zylinderförmigen Umfangsoberfläche (102); und
- an beiden Stangenendbereichen (104) angeformten Profilierungen (108) geeignet für die Befestigung von Koppelteilen aus Kunststoff oder Leichtmetall vorzugsweise durch Umspritzen;
- wobei eine um die Profilierungen (108) des Stangenendbereiches (104) gelegte Hüllkurve einen Durchmesser (114) aufweist, der um mindestens 6% größer ist als der Durchmesser (116) einer um den prismatischen mittleren Stangenbereich (105) gelegten Hüllkurve;
- **dadurch gekennzeichnet, dass**
- die Profilierungen (108) zumindest in Teilbereichen eine Profiltiefe (110) von mindestens 0,5mm, vorzugsweise von annähernd 1mm aufweisen;
wobei die Profilierungen (108) je Stangenendbereich (104) als mindestens eine spindelförmig um die Stange verlaufende Spindelrille (140) ausgebildet sind und diese Rille an beiden Stangenendbereichen (104) in gleichem Schrägungssinn (142) verläuft;
- wobei der zwischen dem Hüllkurvendurchmesser (114) und den Profilierungen (108) liegende Zwischenbereich je Stangenendbereich (104) ein Profilvolumen (112) von mindestens 250mm³ aufweist.

2. Stange (100) für Verbindungsstützen nach Anspruch 1,
wobei der zwischen dem Hüllkurvendurchmesser (114) und den Profilierungen (108) liegende Zwischenbereich je Stangenendbereich (104) ein Profilvolumen (112) von über 350 mm³ aufweist.

3. Stange (100) für Verbindungsstützen nach einem der vorstehenden Ansprüche,
wobei die um die Profilierungen (108) des Stangenendbereiches (104) gelegte Hüllkurve einen Durchmesser (114) aufweist, der um maximal 20% größer ist als der Durchmesser (116) einer um den prismatischen mittleren Stangenbereich (105) gelegten Hüllkurve und die Profiltiefe (110) der Profilierungen (108) maximal 2mm beträgt.

4. Stange (100) für Verbindungsstützen nach einem der vorstehenden Ansprüche,
wobei die Nutbreite (144) gegenüber der Stegbreite (146) um mindestens 30 %, bevorzugt um etwa 100 % größer ist.

5. Stange (100) für Verbindungsstützen nach einem der vorstehenden Ansprüche,
wobei die Spindelrillen (140) zweigängig bis siebengängig verlaufen und der Schrägungswinkel α an beiden Stangenendbereichen (104) annähernd gleich ist.

6. Stange (100) für Verbindungsstützen nach einem der vorstehenden Ansprüche,
wobei die Spindelrillen (140) dreigängig ausgebildet sind und unter einem Schrägungswinkel α von 50° bis 75° verlaufen.

7. Stange (100) für Verbindungsstützen nach einem der vorstehenden Ansprüche,
wobei die Profilierungen (108) in die Stangenendfläche (106) auslaufen.

8. Stange (100) für Verbindungsstützen nach einem der vorstehenden Ansprüche,
wobei die Profilierungen (108) einen Profilabstand (150) von der Stangenendfläche (106) aufweisen und dieser Abstand vorzugsweise kleiner ist als der Durchmesser (116) des mittleren Stangenbereiches (105).

9. Stange (100) für Verbindungsstützen nach einem der vorstehenden Ansprüche, wobei je Stangenendbereich (104) zusätzlich mindestens eine Querrille (120) lateral zur Längsachse (118) der Stange neben den Spindelrillen (140), vorzugsweise zwischen Stangenendfläche (106) und Spindelrillen (140) angeordnet ist.

10. Verbindungsstütze (200), insbesondere zum Aufnehmen von axialen Zug- und Druckkräften und von Drehmomenten, mit:
- einer Stange (100) nach einem der vorstehenden Ansprüche; und
- an beiden Stangenendbereichen (104) vorzugsweise durch Umspritzen befestigten Koppelteilen (210) aus Kunststoff oder Leichtmetall; und
- jedes Koppelteil (210) über eine Verbindungslänge (212), die mindestens dem zweifachen Durchmesser (116) der Stange im mittleren Stangenbereiches (105) entspricht, mit der Stange verbunden ist,
- wobei jedes Koppelstück (210) ein den axialen Zugkräften entgegenwirkendes und durch die Profilierungen (108) des Stangenendbereiches (104) definiertes in die Profilierungen (108) hineinragendes Abzugsvolumen von mindestens 250 mm³ aufweist.

11. Verbindungsstütze (200) nach Anspruch 10,
wobei jedes Koppelteil (210) ein den Drehmomenten entgegenwirkendes und durch die Profilierungen (108) des Stangenendbereiches (104) definiertes in die Profilierungen (108) hineinragendes Abdrehvolumen von mindestens 250mm³ aufweist.

12. Verbindungsstütze (200) nach einem der Ansprüche 10 - 11,
wobei das durch die Profilierungen (108) des Stangenendbereiches (104) definierte Lagesicherungsvolumen (216) jedes Koppelteiles (210) größer als 350 mm³ ist.

## Claims

1. Rod (100) for link supports, in particular for absorbing axial tensile and compressive forces and torques, comprising:
- a wire portion made from metal having a substantially prismatic, preferably cylindrical, circumferential surface (201); and
- profiles (108) integrally formed on both rod end regions (104) suitable for securing coupling parts made from plastic or light metal, preferably by injection moulding;
- an envelope curve bounding the profiles (108) of the rod end region (104) having a diameter (114) that is at least 6% bigger than the diameter (116) of an envelope curve bounding the prismatic middle rod region (105);
- **characterised in that**
- the profiles (108) have a profile depth (110) of at least 0.5 mm, preferably approximately 1 mm, at least in certain regions;
and the profiles (108) of each rod end region (104) are formed by at least one spindle groove (140) extending around the rod in a spindle shape and this groove extends in the same direction of inclination (142) at both rod end regions (104);
- and the intermediate region lying between the envelope curve diameter (114) and the profiles (108) of each rod end region (104) has a profile volume (112) of at least 250 mm³.

2. Rod (100) for link supports as claimed in claim 1,
wherein the intermediate region lying between the envelope curve diameter (114) and the profiles (108) of each rod end region (104) has a profile volume (112) of more than 350 mm³.

3. Rod (100) for link supports as claimed in one of the preceding claims,
wherein the envelope curve bounding the profiles (108) of the rod end region (104) has a diameter (114) that is at most 20% bigger than the diameter (116) of an envelope curve bounding the prismatic middle rod region (105) and the profile depth (110) of the profiles (108) is at most 2 mm.

4. Rod (100) for link supports as claimed in one of the preceding claims,
wherein the groove width (144) is at least 30% bigger, preferably approximately 100% bigger, than the land width (146).

5. Rod (100) for link supports as claimed in one of the preceding claims,
wherein the spindle grooves (140) extend in a double-start to seven-start arrangement and the angle of inclination α is approximately the same at both rod end regions (104).

6. Rod (100) for link supports as claimed in one of the preceding claims,
wherein the spindle grooves (140) are of a triple-start design and extend at an angle of inclination α of 50° to 75°.

7. Rod (100) for link supports as claimed in one of the preceding claims
wherein the profiles (108) terminate in the rod end face (106).

8. Rod (100) for link supports as claimed in one of the preceding claims
wherein the profiles (108) have a profile spacing (150) from the rod end face (106) and this spacing is preferably smaller than the diameter (116) of the middle rod region (105).

9. Rod (100) for link supports as claimed in one of the preceding claims
wherein each rod end region (104) is additionally provided with at least one transverse groove (120) disposed laterally with respect to the longitudinal axis (118) of the rod adjacent to the spindle grooves (140), preferably between the rod end face (106) and spindle grooves (140).

10. Link support (200), in particular for absorbing axial tensile and compressive forces and torques, comprising:
- a rod (100) as claimed in one of the preceding claims; and
- coupling parts (210) made from plastic or light metal secured to both rod end regions (104) preferably by injection moulding; and
- each coupling part (210) is connected to the rod across a connecting length (212) which corresponds to at least twice the diameter (116) of the rod in the middle rod region (105),
- wherein each coupling part (210) has a pull-out volume of at least 250 mm³ extending into the profiles (108), counteracting axial tensile forces and defined by the profiles (108) of the rod end region (104).

11. Link support (200) as claimed in claim 10,
wherein each coupling part (210) has an anti-twist volume of at least 250 mm³ extending into the profiles (108), counteracting torques and defined by the profiles (108) of the rod end region (104).

12. Link support (200) as claimed in one of claims 10 - 11,
wherein the position-securing volume (216) of each coupling part (210) defined by the profiles (108) of the rod end region (104) is greater than 350 mm³.

## Revendications

1. Barre (100) pour des supports de liaison, en particulier pour la réception de forces de traction et de pression axiales et de couples, avec :
- une section de fil en métal avec une surface périphérique (102) sensiblement prismatique de préférence cylindrique ; et
- des profilages (108) formés au niveau des deux zones d'extrémité de barre (104) appropriés pour la fixation de parties de couplage en matière plastique ou métal léger de préférence par moulage par injection ;
- dans laquelle une courbe d'enveloppe placée autour des profilages (108) de la zone d'extrémité de barre (104) présente un diamètre (114) qui est supérieur d'au moins 6 % au diamètre (116) d'une courbe d'enveloppe placée autour de la zone de barre (105) médiane prismatique ;
- **caractérisée en ce que**
- les profilages (108) présentent au moins dans des zones partielles une profondeur de profil (110) d'au moins 0,5 mm, de préférence d'approximativement 1 mm ;
dans laquelle les profilages (108) sont réalisés par zone d'extrémité de barre (104) en tant qu'au moins une rainure de broche (140) s'étendant en forme de broche autour de la barre et cette rainure s'étend au niveau des deux zones d'extrémité de barre (104) dans le même sens d'inclinaison (142) ;
- dans laquelle la zone intermédiaire se trouvant entre le diamètre de courbe d'enveloppe (114) et les profilages (108) présente par zone d'extrémité de barre (104) un volume de profil (112) d'au moins 250 mm³.

2. Barre (100) pour des supports de liaison selon la revendication 1,
dans laquelle la zone intermédiaire se trouvant entre le diamètre de courbe d'enveloppe (114) et les profilages (108) présente par zone d'extrémité de barre (104) un volume de profil (112) supérieur à 350 mm³.

3. Barre (100) pour des supports de liaison selon l'une des revendications précédentes,
dans laquelle la courbe d'enveloppe placée autour des profilages (108) de la zone d'extrémité de barre (104) présente un diamètre (114) qui est supérieur de 20 % au maximum au diamètre (116) d'une courbe d'enveloppe placée autour de la zone de barre (105) médiane prismatique et la profondeur de profil (110) des profilages (108) s'élève au maximum à 2 mm.

4. Barre (100) pour des supports de liaison selon l'une des revendications précédentes,
dans laquelle la largeur de rainure (144) est supérieure d'au moins 30 %, de préférence d'environ 100 % par rapport à la largeur de nervure (146).

5. Barre (100) pour des supports de liaison selon l'une des revendications précédentes,
dans laquelle les rainures de broche (140) s'étendent de deux pas jusqu'à sept pas et l'angle d'inclinaison α est identique en s'approchant des deux zones d'extrémité de barre (104).

6. Barre (100) pour des supports de liaison selon l'une des revendications précédentes,
dans laquelle les rainures de broche (140) sont réalisées à trois pas et s'étendent sous un angle d'inclinaison α de 50° à 75°.

7. Barre (100) pour des supports de liaison selon l'une des revendications précédentes,
dans laquelle les profilages (108) se terminent dans la surface d'extrémité de barre (106).

8. Barre (100) pour des supports de liaison selon l'une des revendications précédentes,
dans laquelle les profilages (108) présentent une distance de profil (150) de la surface d'extrémité de barre (106) et cette distance est de préférence inférieure au diamètre (116) de la zone de barre médiane (105).

9. Barre (100) pour des supports de liaison selon l'une des revendications précédentes,
dans laquelle par zone d'extrémité de barre (104) en outre au moins une rainure transversale (120) est agencée latéralement à l'axe longitudinal (118) de la barre à côté des rainures de broche (140), de préférence entre la surface d'extrémité de barre (106) et les rainures de broche (140).

10. Support de liaison (200), en particulier pour la réception de forces de traction et de pression axiales et de couples, avec :
- une barre (100) selon l'une des revendications précédentes ; et
- des parties de couplage (210) en matière plastique ou métal léger fixées au niveau des deux zones d'extrémité de barre (104) de préférence par moulage par injection ; et
- chaque partie de couplage (210) est reliée à la barre par le biais d'une longueur de liaison (212) qui correspond au moins à deux fois le diamètre (116) de la barre dans la zone de barre médiane (105),
- dans lequel chaque pièce de couplage (210) présente un volume d'extraction agissant contre les forces de traction axiales et pénétrant dans les profilages (108) défini par les profilages (108) de la zone d'extrémité de barre (104) d'au moins 250 mm³.

11. Support de liaison (200) selon la revendication 10,
dans lequel chaque partie de couplage (210) présente un volume de torsion agissant contre les couples et pénétrant dans les profilages (108) défini par les profilages (108) de la zone d'extrémité de barre (104) d'au moins 250 mm³.

12. Support de liaison (200) selon l'une des revendications 10 et 11,
dans lequel le volume de blocage de position (216) de chaque partie de couplage (210), défini par les profilages (108) de la zone d'extrémité de barre (104), est supérieur à 350 mm³.
